# EUROPEAN PATENT SPECIFICATION

(11) **EP 4 067 608 B1**
(45) Date of publication and mention of the grant of the patent: **01.05.2024**
(21) Application number: 22161696.4
(22) Date of filing: 11.03.2022
(51) Int. Cl.: E05B 19/04, G07C 9/00, E05B 35/14, E05B 49/00, E05B 47/06, E05B 47/00, E05B 35/00

(54) **MECHATRONIC KEY**
MECHATRONISCHER SCHLÜSSEL
CLÉ MÉCATRONIQUE

(30) Priority: 29.03.2021 CH 3292021
(43) Date of publication of application: 05.10.2022
(73) Proprietor: SEA Schliess-Systeme AG, 3052 Zollikofen (CH)
(72) Inventor: Berger, Christian, 3052 Zollikofen (CH); Künzi, Christof, 3052 Zollikofen (CH); Casciero, Mauro, 3052 Zollikofen (CH)
(74) Representative: Vesterinen, Jussi Tapio

(56) References cited:
- EP-A1- 0 704 589
- DE-A1-102015 205 213
- US-A1- 2003 051 520
- US-A1- 2003 209 044
- US-A1- 2005 229 662
- US-B1- 6 308 542

## Description

### TECHNICAL FIELD

The present invention relates to a mechatronic key, i.e. a mechanical electrical key. More specifically, the proposed key comprises a radiocommunication circuit that is configured to wirelessly communicate with a control circuit of an access system.

### BACKGROUND OF THE INVENTION

Currently known mechatronic keys typically have a passive radio frequency identification (RFID) tag that is configured to wirelessly communicate with a reader element of a lock element to open a door, for instance. An RFID system uses electromagnetic fields to automatically identify and/or track tags attached to objects, such as keys. An RFID system generally consists of a small radio transponder, and a reader device comprising a radio receiver and transmitter. When triggered by an electromagnetic interrogation pulse from a nearby RFID reader device, the tag transmits digital data back to the reader. The received data can then be used by the reader device to identify the tag. Passive tags are powered by energy from the reader device's interrogating radio waves. Active tags on the other hand are powered by a battery and thus can be generally read at a greater range from the reader device, up to hundreds of meters.

Currently existing mechatronic keys generally comprise a passive RFID tag, which is placed on one side of the key head. The back side of the RFID tag is typically formed by a metal extension of the key blade. However, this leads to a key having a thick key head. Furthermore, the manufacturing process of this kind of key includes several manufacturing steps, which increases the cost of such keys. Perhaps the most significant disadvantage of these kinds of keys is that these keys can typically only be successfully read by the reader device if the tag side of the key head (as opposed to the metal back side of the key head) is pointed at the reader device, since the electromagnetic waves often do not sufficiently pass through the back side of the RFID tag, which typically is made of metal, and since the range of the antenna is adjusted for only one part or side of the key. This leads to a very limited reading ability on the metal side of the key, since the antenna of the RFID tag is not calibrated at all for that side of the key.

DE102015205213A1 relates to a profile cylinder key with a key head and with a key shank extending from the key head. The key head has a material recess, and an RFID transponder unit being arranged therein.

US6308542B1 discloses key assemblies each having a key blank, a transponder, a transponder holder, and a key head section cover moulded to encapsulate the transponder and at least part of its holder.

### SUMMARY OF THE INVENTION

It is an object of the present invention to overcome at least some of the problems identified above related to mechatronic keys.

According to a first aspect of the invention, there is provided a mechatronic key as recited in claim 1.

The proposed new key has the advantage that the key, and in particular the key head, can be made much thinner compared to existing mechatronic keys. More specifically, the thickness of the key head can be only minimally thicker than the thickness of the key blade. Moreover, the proposed key is reversible. This means that either side of the key head may be pointed at a reader device and the data from the electric or radiocommunication circuit, such as an RFID circuit, can still be successfully read by the reader device. Furthermore, the manufacturing process of the key can be simplified compared to a manufacturing process of existing mechatronic keys. This in turn leads to reduced manufacturing costs. It is further to be noted that the design of the proposed mechatronic key can be made relatively similar to existing mechanical keys. This aspect would keep the manufacturing costs to the minimum for the entire key portfolio.

According to a second aspect of the invention, there is provided a lock system comprising the key according to the first aspect of the invention, and further comprising a reader device configured to wirelessly read a coding of the electric circuit when the key is placed within a wireless reading distance from the reader device.

Other aspects of the invention are recited in the dependent claims attached hereto.

### BRIEF DESCRIPTION OF THE DRAWINGS

Other features and advantages of the invention will become apparent from the following description of a non-limiting exemplary embodiment, with reference to the appended drawings, in which:

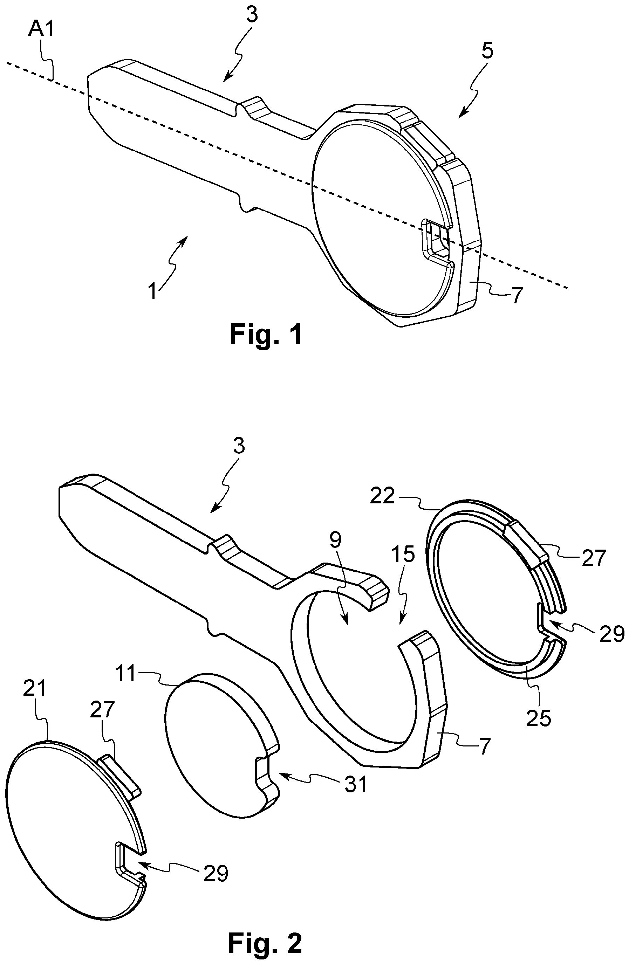

- Figure 1 is an isometric view of a key according to an embodiment of the present invention;
- Figure 2 is an exploded view of the key of Figure 1;

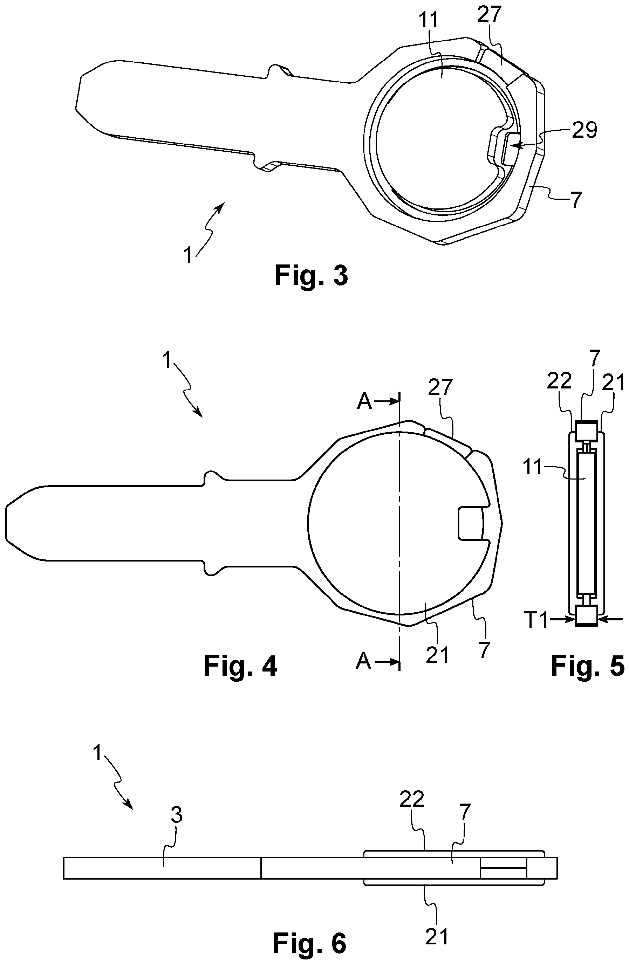

- Figure 3 is an isometric view of the key of Figure 1 but without one of the key head covers;
- Figure 4 is a side view of the key of Figure 1;
- Figure 5 is a cross-sectional view of the key of Figure 1, where the cross section is taken along line A-A shown in Figure 4;
- Figure 6 is a top view of the key of Figure 1;
- Figure 7 is an isometric view of the key of Figure 1, and further showing a reader device in an arrangement where a first side of the key head is pointed at the reader device;
- Figure 8 is an isometric view of the key of Figure 1, and further showing the reader device in an arrangement where the first side of the key head is pointed at the reader device, but where the distance between the key and the reader device has been increased compared to the situation of Figure 7; and
- Figure 9 is an isometric view of the key of Figure 1, and further showing the reader device in an arrangement where a second side of the key head is pointed at the reader device.

### DETAILED DESCRIPTION OF AN EMBODIMENT OF THE INVENTION

An embodiment of the present invention will now be described in detail with reference to the attached figures. This embodiment is described in the context of a mechatronic key for unlocking a door, but the teachings of the invention are not limited to this application environment. More generally, the proposed key may be used to unlock a lock system to gain access to a given space. When the words first and second are used to refer to different elements, it is to be understood that this does not necessarily imply or mean that the first and second elements are somehow structurally substantially different elements or that their dimensions are substantially different unless implicitly or explicitly stated. Moreover, the word "end" is understood not only to mean the actual end of an element but to also cover an end region in the proximity of the actual end of the respective element. The proximal end is understood in the present description to mean the end or side which is closer to the user of the key. The distal end is understood to be the opposite end, in other words the end away from the user of the key. Identical or corresponding functional and structural elements which appear in the different drawings are assigned the same reference numerals.

The key 1, which in this case is a mechatronic key, as shown in the drawings can be understood to be divided into a key blade 3, also known as a key shank or key shaft, and key head 5 for gripping the key. By a mechatronic key may in the present description be understood an electronic or smart key having a key blade which may or may not have a mechanical key coding. The key blade is sized and shaped to be received in a key channel, which is also known as a key slot, keyhole or keyway of a key lock, such as a cylinder lock. The key blade may comprise a mechanical key coding scheme or system, which however is not shown in the drawings for simplicity. The key blade also defines a longitudinal axis A1 of the key. This axis substantially coincides with the longitudinal axis of the key channel when the key is in the key channel. By moving the key along this axis, the key can be inserted into the key channel.

In this example, the key blade 3 has a substantially rectangular cross-section, but other cross-sectional shapes, such as a substantially circular shape, are also possible. The key blade may comprise pin-engaging means, generally referred to as dimples, on the top and/or bottom edge and/or on one or both lateral sides of the blade, which are arranged to engage with rotor pins when the key blade is inserted into a key channel of a lock. The lateral side(s) of the blade may additionally or instead comprise one or more grooves to engage with further validating means, known as tumblers in a rotor of a key cylinder. However, the teachings of the invention would also apply to keys with no grooves, or one or more grooves possibly on either lateral side of the key blade. Instead of, or in addition to the groove(s), the lateral side(s) could comprise further dimples, cavities and/or protrusions. The key blade may also optionally comprise on at least one of its lateral sides an electronic structural element (not shown in the figures). The purpose of this element would be to create a physical contact with electrical contacts in the key lock. In this manner, this optional electronic element may also be used to unlock the lock.

The key blade may as well comprise at least on one of the top and bottom edges and/or or on at least one of the lateral sides a dynamical part (not shown in the figures), which may be understood as a force transferring element or means. The force transferring element may be configured as a pivoting element. Thus, the force transferring means may also be called an active moving element, since it may be arranged to be actively urged by at least one rotor pin. The pivoting element may at least be partly made of metal, plastic or ceramic, or a combination thereof. The pivoting element may be provided in a cavity in the key blade 3. The pivoting element may be held in place by holding means, such as a rivet, and it may be arranged to rotate or pivot about a rotation axis, which would coincide with the longitudinal axis of the rivet. The holding means (rivet) may or may not pass through the whole lateral cross section of the key. In another variant, the rotation axis is not fixed, but may be arranged to move so that the rotation axis remains substantially orthogonal to the longitudinal axis of the key. One of the advantages of the pivoting element would be that key blanks, keys and/or the cylinder locks would be more difficult to reproduce by unauthorised third parties. Furthermore, this kind of key would provide increased security, because the pivoting element can be used to code the key. Furthermore, fraudulent opening of the lock is made more difficult, because at least one of the rotor pins may have to be in a recessed position in its through hole in order to rotate the rotor.

The key head 5 comprises a ring 7 encompassing or surrounding a cavity 9, which in this case is a central cavity of the key head. The ring may thus be understood to form an unbroken or broken loop or band, but not necessarily a loop of a circular shape, i.e. the ring may be of a circular shape or of a non-circular shape. In the present example, the ring and the key blade form a monobloc element, i.e. they form one single piece or element. The key blade is thus arranged at a distal end of the key, while the ring is at a proximal end of the key. The key blade extends between the ring at a central or middle region of the key and a tip of the key forming the distal end of the key.

The key also comprises an electric circuit 11, such as an RFID tag, which is arranged to wirelessly communicate with an electronic control device 13 of a locking system, referred to also as a lock, and which in this case may also comprise the cylinder lock. The electric circuit is partially or fully placed in the cavity 9. In this example, the electric circuit is an RFID tag 11, and more specifically a passive RFID tag, while the electronic control device is an RFID reader device. The RFID tag 11 is thus configured to communicate with the RFID reader device 13, which may be comprised in the cylinder lock system or be a part of the cylinder lock system as an outstanding member. In this manner the RFID tag 11, and the RFID reader device 13 comprise the key coding. In order to be able to unlock the locking system, the RFID reader device has to be able to read the correct coding from the RFID tag. In response to having read the correct coding, the RFID reader device will change the state of the locking system to an unlocked state, or when the key coding is not recognised, the locking system remains in a locked state. As the communication between the RFID tag 11 and the RFID reader device 13 takes place by radio transmission, this means that depending on how the lock system is configured, the key 1 does not necessarily have to be inserted into the key channel in order to change the state of the locking system. However, optionally, in order to unlock the locking system, and in particular the cylinder lock, it is also necessary to insert the key into the key channel in order to also unlock the mechanical locking mechanism of the cylinder lock. Thus, depending on how the locking system is configured, it may be sufficient to fully unlock the locking system by only successfully reading the coding of the RFID tag 11. However, optionally both the mechanical coding and the coding of the RFID tag may have to be read in order to fully unlock the locking system. The above-mentioned electronic structural element may also optionally be used to lock and/or unlock the locking system. The RFID tag may also optionally be used to lock the locking system, if it is configured in this manner. The locking system may also be configured so that it automatically changes its sate to the locked state after a given time period has passed since the last successful reading of the coding of the RFID tag. Also, the locking system may be configured so that the state becomes locked every time when a given event happens, e.g. a door closes.

Thus, at least three different locking system configurations may be provided as briefly explained next. In a first scenario, a cylinder lock may be omitted, and it would be sufficient to unlock the locking system by the RFID reader device 13 successfully reading the coding of the RFID tag 11. In this case, in a locked state, a door handle (or another corresponding element) could be manipulated freely without being able to open the door, while in an unlocked state, the locking system would be unlocked, and the door could be opened by operating the door handle. In a second scenario, the RFID reader device 13 would be placed on a cylinder lock or coupled to it to form a knob cylinder so that the rotor of the cylinder lock would be rotated by the RFID reader device 13 as soon as it successfully reads the coding of the RFID tag to unlock the locking system. In this case, it would not be necessary to insert the key blade into the cylinder lock. According to a third scenario, the RFID reader device 13 would be inside the cylinder lock, which in this case would be a mechatronic cylinder, or coupled to it such that in order to be able to read the coding of the RFID tag, the key blade would optionally have to be inserted into the keyhole of the cylinder lock. Only by successfully reading the coding of the RFID tag by the RFID reader device 13, the key could be used to rotate the rotor of the cylinder lock to unlock the locking system. Thus, the reader device 13 may be placed within a cylinder lock or on the cylinder lock.

The ring comprises a hole or opening 15 so that the ring only partially circumferentially encircles the cavity in the plane defined by the respective side surface of the key blade. In other words, the ring 7 is circumferentially discontinuous (non-continuous) or the ring is circumferentially broken. This has the advantage that the read distance of the RFID tag 11 can be increased compared to a key having an unbroken ring. More specifically, the travel distance of the electromagnetic waves emitted by the RFID tag without considerable attenuation can be significantly increased compared to a solution with an unbroken ring. This is due to the fact that the broken ring interferes less with the electromagnetic field lines compared to a solution where the ring is unbroken. The opening 15 can in principle be placed along any location of the ring, and its length along the ring circumference is preferably between 0.1 mm and 20 mm, and more specifically between 0.1 mm and 10 mm, or between 1 mm and 5 mm. The length of the opening along the ring circumference may thus be at most 20 mm, 10 mm or 5 mm. For instance, if the key is placed so that its longitudinal axis A1 is horizontal, then the opening is advantageously located in the ring top or ring bottom region. An unbroken ring section would ideally be present in the ring centre region to be able to easily attach the key to a key ring (not shown in the drawings) in a conventional manner. The key centre region may be defined to be the region of the key in the immediate vicinity of the longitudinal axis A1 of the key. In other words, an unbroken ring section may be present in a ring centre region defined by the longitudinal axis (A1) of the key (1) or the key blade's virtual extension. It is to be further noted that the opening 15 could be filled with a ring portion made of electrically non-conductive material, such as plastic. In this configuration, the ring could be considered to be continuous and/or fully surrounding the RFID tag. It is to be noted that the ring may comprise more than one opening 15, for example two openings. In this case, the different ring sections would be coupled to each other by a structural element and/or by one or more cover elements as explained later.

In the present example, the thickness of the RFID tag 11 substantially equals or is smaller than the thickness T1 of the ring 7, when measured orthogonally to the longitudinal axis A1 of the key. This means that the RFID tag does not protrude cross-sectionally beyond the thickness of the ring. Furthermore, the thickness of the ring substantially equals the thickness of the key blade 3. This has the advantage that the overall thickness of the key can be minimised. However, according to a variant of the present invention (not shown in the figures), the RFID tag would be thicker than the thickness T1 of the ring. This would increase the reading distance of the RFID tag compared to a thinner RFID tag.

The key also comprises a cover arrangement or assembly, which according to the invention comprises a first cover element 21, or simply a first cover, and a second, different cover element 22, or simply a second cover. The first and second cover elements may be considered as independent elements, which may be joined together (by welding for example) as explained later. In order not to substantially interfere with the electromagnetic radio waves emitted by the RFID tag and received from the RFID reader device, the cover assembly is made of an electrically non-conductive material, such as a plastic material or wood. However, the cover assembly could instead be a single-piece cover element comprising a first and a second cover element so that one end of the first or second cover element could comprise a hinge-like arrangement for instance. In this manner, the single-piece cover arrangement could be folded over the key head to protect the RFID tag 11. In this example, the first and second cover elements 21, 22 are substantially mirrored elements with respect to each other. The cover assembly is shaped and sized so as to form a grip element for gripping the key head 5.

As shown in the figures, the first and second cover elements are in this example substantially flat elements or predominantly flat elements with a smooth or substantially smooth outer surface. The first and second cover elements also comprise according to the invention on their inner surface a relief or protruding feature 25, which forms a closed or broken relief ring or rim. The relief feature 25 serves to correctly position the cover elements on the key head. They may also be used to attach or couple the cover elements onto the ring, for instance in a form-fit manner. Furthermore, the relief feature 25 at least on one of the cover elements may optionally also be used to hold the RFID tag in place in the cavity 9. Here again, the RFID tag may be held in place in a form-fit manner. Additionally, or instead of the form-fit connection, the first and second cover elements 21, 22 may be welded to each other or to the ring. The cover elements 21, 22 may thus be mounted onto the ring 7 and/or welded together forming the grip of the key. The relief features may be used as contact surfaces for the welding. More specifically, the welding process may be implemented by ultrasonic welding or heat fusion, also called heat welding, butt welding or simply fusion, which is a welding process used to join two different pieces, for instance made of a thermoplastic. This process involves heating both pieces simultaneously and then pressing them together. The two pieces then cool and form a permanent bond. When the welding is done properly, the two pieces form a monobloc, and they become inseparable from each other unless excessive force is used to separate them. Additionally, or instead of the above-mentioned connections, the cover assembly can be coupled to the ring by a clip arrangement and/or by gluing for instance so that the cover elements are glued together, and/or so that the cover assembly is glued directly to the ring.

In this example, both the first and second cover elements 21, 22 also comprise a protruding element 27 or portion or simply a protrusion in their respective circumference region. The purpose of these protruding elements 27 is to close up the space in the opening 15 to better protect the RFID tag within the cavity. When the cover elements are assembled onto the ring 7, the protrusions thus extend towards each other. However, instead of both of the cover elements comprising the protruding element, only one of them could comprise the protruding element, but it could in this case be wider to substantially fully fill the opening 15. The ring 7 forms and/or defines an outer periphery or an outer periphery section of the of the key head, or more specifically a first outer periphery section, while a second outer periphery section would be formed and/or defined by the protruding element(s) 27. In other words, the cover arrangement does not extend beyond the outline defined by the ring 7 and optionally by its virtual extension.

The cover assembly may further comprise a hole 29, an opening or a recess through the cover assembly to allow the key to be attached to a key ring. In a similar manner, also the RFID tag 11 could comprise a hole 31, an opening or a recess, such that the location of the recess of the RFID tag coincides with the recesses in the cover elements 21, 22. In this example the hole is in the centre region of the key head and at the proximal end. The hole or passage extends across the key head orthogonally to the longitudinal axis A1 of the key. The RFID tag is thus shaped and sized to leave a clearance for the passage.

The ring 7 may optionally have a non-circular inner circumference, although in the present example as also shown in the figures, the inner circumference of the ring is circular or substantially circular. The non-circular inner circumference would have the advantage that the cover elements can be assembled to the ring without the risk of them rotating on the ring once assembled. Furthermore, the ring has a non-circular cross section orthogonally to the longitudinal axis A1 of the key. This has the advantage of minimising the thickness of the key head (and thus also the key) while maximising the strength of the ring. In this example, the ring 7 and thus also the key blade 3 are made of a copper alloy with nickel and optionally also with zinc. This material choice has been found to provide an excellent strength and weight balance. However, the ring and/or the key blade could be made of other materials, such as steel, alloy steel, plastic, carbon, ceramic, etc. A combination of materials could also be used, such that the key blade could be made of a first material or material alloy, while the ring could be made of a second, different material or material alloy, where the first material could be a metal, such as steel, while the second material could be plastic, for example.

The RFID tag 11 is advantageously assembled to the key head symmetrically with respect to the ring 7. This has the advantage that the reading performance of the coding of the RFID tag can be optimised. More specifically, the reading performance and reading distance would be substantially identical irrespective of the side that points at the RFID reader device 13.

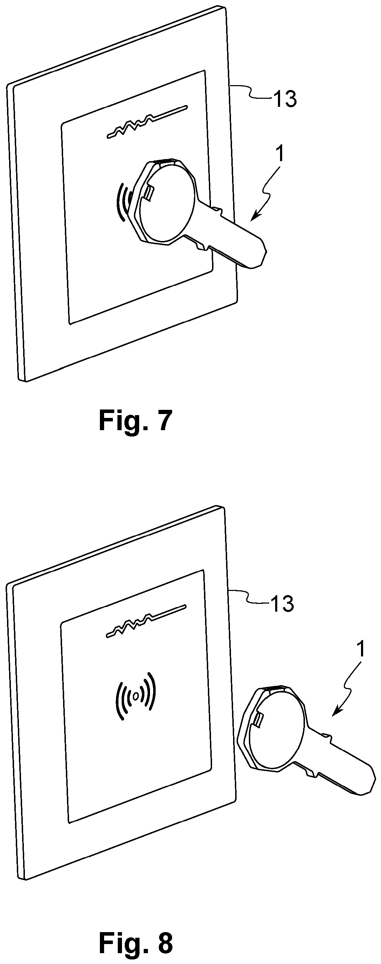

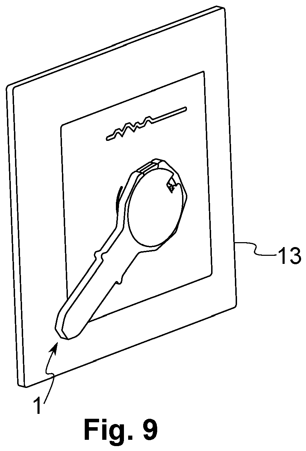

Figures 7 to 9 illustrate some use case examples of the mechatronic key. In the scenario of the Figure 7, the key 1 is in close proximity of the RFID reader device 13 so that a first side of the RFID tag 11 is pointed at the RFID reader device. The scenario of Figure 8 differs from the scenario of Figure 7 in that in the scenario of Figure 8, the distance between the RFID reader and the RFID tag has been increased. In the scenario of Figure 9, a second, different side of the RFID tag 11 is pointed at the RFID reader device 13. In the scenarios of Figures 7 and 9, the RFID reader device 13 is able to successfully read the coding of the RFID tag without any problems irrespective of the side of the key that is pointed at the reader device. The key and the reader device thus form a lock system, where the reader device is configured to wirelessly read the coding of the RFID tag when the key is placed within a wireless reading distance from the reader device.

According to a variant of the invention, the ring 7 could partially or entirely be made of electrically non-conductive material. Thus, the ring could be made of a different material than the key blade 3, or they both could alternatively be made of the same electrically non-conductive material. According to this variant of the invention, the opening 15 would not significantly improve the usability of the key 1 in terms of the tag reading performance.

While the invention has been illustrated and described in detail in the drawings and foregoing description, such illustration and description are to be considered illustrative or exemplary and not restrictive, the invention being not limited to the disclosed embodiment. It is possible to combine any of the above teachings to obtain further variants, always without departing from the scope of the invention, as defined by the appended claims. In the claims, the word "comprising" does not exclude other elements or steps, and the indefinite article "a" or "an" does not exclude a plurality.

## Claims

1. A mechatronic key (1) comprising a key blade (3) for inserting into a key channel, and a key head (5) for gripping the key (1), wherein the key head (5) comprises a ring (7) surrounding a cavity (9), and an electric circuit (11) at least partially placed in the cavity (9), the electric circuit (11) being configured to wirelessly communicate with a reader device (13), wherein the key head (5) further comprises a cover assembly (21, 22) for protecting the electric circuit (11), the cover assembly (21, 22) forming a grip element for gripping the key head (5), wherein the ring (7) comprises an opening (15) to thereby have an interrupted section along a ring circumference of the ring (7), and wherein the opening (15) has a length comprised between 0.1 mm and 20 mm along the ring circumference, **characterised in that** the cover assembly (21, 22) comprises a first cover element (21) and a second cover element (22), wherein at least one of the first and second cover elements (21, 22) comprises a respective protruding feature (25) on an inner face of the respective cover element (21, 22), and wherein the protruding feature (25) is configured as a closed or broken relief ring (25) shaped and sized to engage with the ring (7).

2. The key (1) according to claim 1, wherein an unbroken ring section is present in a ring centre region defined by a longitudinal axis (A1) of the key (1) defined by the key blade (3).

3. The key (1) according to any one of the preceding claims, wherein the ring (7) forms an outer periphery or an outer periphery section of the of the key head (5).

4. The key (1) according to any one of the preceding claims, wherein the cover assembly (21, 22) comprises a first cover element (21) and a second, different cover element (22) such that the first cover element (21) is arranged on a first side of the key head (5), and the second cover element (22) is arranged on a second, opposite side of the key head (5).

5. The key (1) according to any one of the preceding claims, wherein the respective protruding feature (25) is shaped and sized to also engage with the electric circuit (11) to hold it in place within the cavity (9).

6. The key (1) according to any one of the preceding claims, wherein the cover assembly (21, 22) circumferentially fills or substantially fills the opening (15).

7. The key (1) according to any one of the preceding claims, wherein the electric circuit (11) is positioned symmetrically within the cavity (9) with respect to the ring (7).

8. The key (1) according to any one of the preceding claims, wherein the electric circuit (11) is held in place within the cavity by the cover assembly (21, 22).

9. The key (1) according to any one of the preceding claims, wherein the cover assembly (21, 22) is coupled to the ring (7) by at least one of the following connections: a press-fit connection, a clip arrangement, gluing and a welded connection.

10. The key (1) according to any one of the preceding claims, wherein the key head (5) comprises a passage substantially orthogonally to a key longitudinal axis (A1), the passage being at least partially formed by a recess (29) in the cover assembly (21, 22) or a through hole across the cover assembly (21, 22) orthogonally to the key longitudinal axis (A1), and wherein the electric circuit (11) is shaped and sized to leave a clearance for the passage.

11. The key (1) according to any one of the preceding claims, wherein the thickness of the electric circuit (11) orthogonally to a key longitudinal axis (A1) equals or is smaller than the thickness of the ring (7) orthogonally to the key longitudinal axis (A1), or wherein the thickness of the electric circuit (11) orthogonally to a key longitudinal axis (A1) is greater than the thickness of the ring (7) orthogonally to the key longitudinal axis (A1).

12. The key (1) according to any one of the preceding claims, wherein the ring (7) is made at least of a copper alloy with nickel.

13. The key (1) according to any one of the preceding claims, wherein the electric circuit (11) is a radio frequency identification tag (11).

14. A lock system comprising the key (1) according to any one of the preceding claims, and further comprising a reader device (13) configured to wirelessly read a coding of the electric circuit (11) when the key (1) is placed within a wireless reading distance from the reader device (13).

## Patentansprüche

1. Mechatronischer Schlüssel (1), umfassend ein Schlüsselblatt (3) zum Einführen in einen Schlüsselkanal, und einen Schlüsselkopf (5) zum Greifen des Schlüssels (1), wobei der Schlüsselkopf (5) einen Ring (7), der einen Hohlraum (9) umgibt, und eine elektrische Schaltung (11) umfasst, die zumindest teilweise in dem Hohlraum (9) platziert ist, wobei die elektrische Schaltung (11) dazu konfiguriert ist, drahtlos mit einer Lesevorrichtung (13) zu kommunizieren, wobei der Schlüsselkopf (5) ferner eine Abdeckanordnung (21, 22) zum Schützen der elektrischen Schaltung (11) umfasst, und wobei die Abdeckanordnung (21, 22) ein Griffelement zum Greifen des Schlüsselkopfes (5) bildet, wobei der Ring (7) eine Öffnung (15) umfasst, wodurch ein unterbrochener Abschnitt entlang eines Ringumfangs des Rings (7) entsteht, wobei die Öffnung (15) entlang des Ringumfangs eine Länge zwischen 0,1 mm und 20 mm aufweist, **dadurch gekennzeichnet, dass** die Abdeckanordnung (21, 22) ein erstes Abdeckelement (21) und ein zweites Abdeckelement (22) umfasst, wobei mindestens eines der ersten und zweiten Abdeckelemente (21, 22) ein jeweiliges hervorstehendes Merkmal (25) auf einer Innenfläche des jeweiligen Abdeckelements (21, 22) umfasst, und wobei die hervorstehendes Merkmal (25) als geschlossener oder gebrochener Reliefring (25) ausgebildet ist und geformt und dimensioniert ist, um mit dem Ring (7) in Eingriff zu kommen.

2. Schlüssel (1) nach Anspruch 1, wobei ein ununterbrochener Ringabschnitt in einem Ringmittelbereich vorhanden ist, der durch eine durch das Schlüsselblatt (3) definierte Längsachse (A1) des Schlüssels (1) definiert ist.

3. Schlüssel (1) nach einem der vorhergehenden Ansprüche, wobei der Ring (7) einen Außenumfang oder einen Außenumfangsabschnitt des Schlüsselkopfes (5) bildet.

4. Schlüssel (1) nach einem der vorhergehenden Ansprüche, wobei die Abdeckanordnung (21, 22) ein erstes Abdeckelement (21) und ein zweites, unterschiedliches Abdeckelement (22) umfasst, so dass das erste Abdeckelement (21) auf einer ersten Seite des Schlüsselkopfes (5) angeordnet ist, und das zweite Abdeckelement (22) ist auf einer zweiten, gegenüberliegenden Seite des Schlüsselkopfes (5) angeordnet ist.

5. Schlüssel (1) nach einem der vorhergehenden Ansprüche, wobei das jeweilige hervorstehende Merkmal (25) so geformt und bemessen ist, dass es auch mit der elektrischen Schaltung (11) in Eingriff kommt, um sie innerhalb des Hohlraums (9) an Ort und Stelle zu halten.

6. Schlüssel (1) nach einem der vorhergehenden Ansprüche, wobei die Abdeckanordnung (21, 22) die Öffnung (15) in Umfangsrichtung ausfüllt oder im Wesentlichen ausfüllt.

7. Schlüssel (1) nach einem der vorhergehenden Ansprüche, wobei die elektrische Schaltung (11) innerhalb des Hohlraums (9) in Bezug auf den Ring (7) symmetrisch positioniert ist.

8. Schlüssel (1) nach einem der vorhergehenden Ansprüche, wobei die elektrische Schaltung (11) innerhalb des Hohlraums durch die Abdeckanordnung (21, 22) an Ort und Stelle gehalten wird.

9. Schlüssel (1) nach einem der vorhergehenden Ansprüche, wobei die Abdeckanordnung (21, 22) mit dem Ring (7) durch mindestens eine der folgenden Verbindungen gekoppelt ist: eine Presssitzverbindung, eine Klammeranordnung, Kleben und eine Schweissverbindung.

10. Schlüssel (1) nach einem der vorhergehenden Ansprüche, wobei der Schlüsselkopf (5) einen Durchgang im Wesentlichen orthogonal zu einer Schlüssellängsachse (A1) umfasst, wobei der Durchgang zumindest teilweise durch eine Aussparung (29) in der Abdeckanordnung (21, 22) oder ein Durchgangsloch quer durch die Abdeckanordnung (21, 22) orthogonal zur Schlüssellängsachse (A1) gebildet ist, und wobei die elektrische Schaltung (11) so geformt und bemessen ist, dass sie einen Freiraum für den Durchgang lässt.

11. Schlüssel (1) nach einem der vorhergehenden Ansprüche, wobei die Dicke der elektrischen Schaltung (11) orthogonal zu einer Schlüssellängsachse (A1) gleich oder kleiner ist als die Dicke des Rings (7) orthogonal zur Schlüssellängsachse (A1), oder wobei die Dicke der elektrischen Schaltung (11) orthogonal zu einer Schlüssellängsachse (A1) grösser ist als die Dicke des Rings (7) orthogonal zu der Schlüssellängsachse (A1).

12. Schlüssel (1) nach einem der vorhergehenden Ansprüche, wobei der Ring (7) zumindest aus einer Kupferlegierung mit Nickel hergestellt ist.

13. Schlüssel (1) nach einem der vorhergehenden Ansprüche, wobei die elektrische Schaltung (11) ein Funkfrequenzidentifikations-Tag (11) ist.

14. Schlosssystem, umfassend den Schlüssel (1) nach einem der vorhergehenden Ansprüche, und ferner umfassend eine Lesevorrichtung (13), die dazu konfiguriert ist, drahtlos eine Codierung der elektrischen Schaltung (11) zu lesen, wenn der Schlüssel (1) in einem drahtlosen Leseabstand zur Lesevorrichtung (13) angeordnet ist.

## Revendications

1. Clé mécatronique (1) comprenant une lame de clé (3) à insérer dans un canal de clé, et une tête de clé (5) pour saisir la clé (1), dans laquelle la tête de clé (5) comprend un anneau (7) entourant un cavité (9), et un circuit électrique (11) placé au moins partiellement dans la cavité (9), le circuit électrique (11) étant configuré pour communiquer sans fil avec un dispositif de lecture (13), dans laquelle la tête de clé (5) en outre comprend un ensemble couverture (21, 22) pour protéger le circuit électrique (11), l'ensemble couverture (21, 22) formant un élément de poignée pour saisir la tête de clé (5), dans laquelle l'anneau (7) comprend une ouverture (15) pour avoir ainsi une section interrompue le long d'une circonférence de l'anneau (7), et dans laquelle l'ouverture (15) a une longueur comprise entre 0,1 mm et 20 mm le long de la circonférence de l'anneau, **caractérisée en ce que** l'ensemble de couverture (21, 22) comprend un premier élément de couverture (21) et un deuxième élément de couverture (22), dans laquelle au moins l'un des premier et deuxième éléments de couverture (21, 22) comprend une caractéristique saillante respective (25) sur une face interne de l'élément de couverture respectif (21, 22), et la caractéristique saillante (25) étant configurée sous la forme d'un anneau de relief fermé ou cassé (25) formée et dimensionnée pour s'engager avec l'anneau (7).

2. Clé (1) selon la revendication 1, dans laquelle une section d'anneau ininterrompue est présente dans une région centrale d'anneau définie par un axe longitudinal (A1) de la clé (1) défini par la lame de clé (3).

3. Clé (1) selon l'une quelconque des revendications précédentes, dans laquelle l'anneau (7) forme une périphérie externe ou une section de périphérie externe de la tête de clé (5).

4. Clé (1) selon l'une quelconque des revendications précédentes, dans laquelle l'ensemble de couverture (21, 22) comprend un premier élément de couverture (21) et un deuxième élément de couverture différent (22) de telle sorte que le premier élément de couverture (21) est disposé sur un premier côté de la tête de clé (5), et le deuxième élément de couverture (22) est disposé sur un deuxième côté opposé de la tête de clé (5).

5. Clé (1) selon l'une quelconque des revendications précédentes, dans laquelle la caractéristique saillante respective (25) est formée et dimensionnée pour s'engager également avec le circuit électrique (11) pour le maintenir en place à l'intérieur de la cavité (9).

6. Clé (1) selon l'une quelconque des revendications précédentes, dans laquelle l'ensemble de couverture (21, 22) remplit ou sensiblement remplit de manière circonférentielle l'ouverture (15).

7. Clé (1) selon l'une quelconque des revendications précédentes, dans laquelle le circuit électrique (11) est positionné symétriquement à l'intérieur de la cavité (9) par rapport à l'anneau (7).

8. Clé (1) selon l'une quelconque des revendications précédentes, dans laquelle le circuit électrique (11) est maintenu en place à l'intérieur de la cavité par l'ensemble couverture (21, 22).

9. Clé (1) selon l'une quelconque des revendications précédentes, dans laquelle l'ensemble couverture (21, 22) est couplé à l'anneau (7) par au moins l'une des connexions suivantes : une connexion par ajustement serré, un agencement à clip, collage et une connexion soudée.

10. Clé (1) selon l'une quelconque des revendications précédentes, dans laquelle la tête de clé (5) comprend un passage sensiblement orthogonalement à un axe longitudinal de clé (A1), le passage étant au moins partiellement formé par un évidement (29) dans l'ensemble couverture (21, 22) ou un trou traversant à travers l'ensemble couverture (21, 22) orthogonalement à l'axe longitudinal de la clé (A1), et dans laquelle le circuit électrique (11) est formé et dimensionné pour laisser un espace pour le passage.

11. Clé (1) selon l'une quelconque des revendications précédentes, dans laquelle l'épaisseur du circuit électrique (11) orthogonalement à un axe longitudinal de clé (A1) est égale ou inférieure à l'épaisseur de l'anneau (7) orthogonalement à l'axe longitudinal de clé (A1), ou dans laquelle l'épaisseur du circuit électrique (11) orthogonalement à un axe longitudinal de clé (A1) est supérieure à l'épaisseur de l'anneau (7) orthogonalement à l'axe longitudinal de clé (A1).

12. Clé (1) selon l'une quelconque des revendications précédentes, dans laquelle l'anneau (7) est réalisée au moins en un alliage de cuivre avec du nickel.

13. Clé (1) selon l'une quelconque des revendications précédentes, dans laquelle le circuit électrique (11) est un tag d'identification radiofréquence (11).

14. Système de serrure comprenant la clé (1) selon l'une quelconque des revendications précédentes, et comprenant en outre un dispositif de lecture (13) configuré pour lire sans fil un codage du circuit électrique (11) lorsque la clé (1) est placée dans une distance de lecture sans fil du dispositif de lecture (13).
